# EUROPEAN PATENT APPLICATION

(11) **EP 4 790 601 A1**
(43) Date of publication of application: **12.08.2026**
(21) Application number: 26153183.4
(22) Date of filing: 21.01.2026
(51) Int. Cl.: G06N 10/60

(54) **COMPUTER PROGRAM, QUANTUM COMPUTATION SUPPORT METHOD, AND INFORMATION PROCESSING APPARATUS**

(30) Priority: 05.02.2025 JP 2025017772
(71) Applicant: FUJITSU LIMITED, Kawasaki-shi, Kanagawa 211-8588 (JP)
(72) Inventor: KITAJIMA, Hironobu, Kawasaki-shi, 211-8588 (JP)
(74) Representative: Haseltine Lake Kempner LLP

(57) **Abstract**

A processing unit acquires, for a plurality of terms included in a Hamiltonian corresponding to a problem to be solved by a variational quantum eigensolver and capable of being simultaneously measured by a quantum computer, first information indicating the variance of each term and the covariance of each pair of terms, upon performing a simultaneous measurement, generates, based on the first information, an optimization problem that minimizes a total sum of the variance of each term and the covariance of each pair based on the constraint that the amount of a change with respect to an average value of the sum of the terms is equal to or less than a predetermined value, determines a plurality of first terms to be simultaneously measured by the quantum computer by solving the optimization problem, and computes the number of samples of the simultaneous measurement based on the minimized total sum.

## Description

### FIELD

The embodiments discussed herein are related to a computer program, a quantum computation support method, and an information processing apparatus.

### BACKGROUND

In the field of quantum computers, the practical use of a noisy intermediate-scale quantum computer (NISQ) is expected. The NISQ is a medium-scale quantum computer without an error correction function. One application of the NISQ is computation by a variational quantum eigensolver (VQE). The VQE is a variational algorithm for determining a ground state of a quantum multibody system. The VQE is used, for example, for quantum chemical computation in the NISQ. The quantum chemical computation is computation for obtaining a molecular state and physical property information by solving the Schrödinger equation. At present, various researches have been made for the practical use of computation using the VQE.

The Hamiltonian in the VQE is described by a linear combination of the tensor products of Pauli matrices. That is to say, the Hamiltonian is expressed as the sum of a plurality of terms. Each term includes the tensor product of the Pauli matrix and its weighting factor. An expected value of each term included in the Hamiltonian is statistically computed by sampling measurement results by a quantum computer. In general, the number of measurement samples is estimated on the basis of a predetermined allowable error on the assumption that each term is independently measured. The number of samples may also be referred to as the number of shots.

For example, a technique related to simultaneous measurement of a plurality of observables each of which is the tensor product of a Pauli matrix has been proposed. According to this technique, a plurality of observables are measured by one quantum circuit.

There is also a proposal for a system that, in generating a trial state for the VQE, selects the number of samples to take from a qubit for a particular trial state.

In addition, a quantum optimization method has been proposed in which an expectation value of the Hamiltonian in the VQE is estimated for a quantum state by a classical computer, and one or both of the Hamiltonian and the quantum state are converted to reduce the expectation value of the Hamiltonian.

Furthermore, there is a proposal of a system that solves an optimization problem by representing the optimization problem by a cost function in a quadratic unconstrained binary optimization (QUBO) format and finding a minimum eigenvalue of the Hamiltonian representing the cost function using a VQE algorithm. See, for example, the following literatures.
International Publication Pamphlet No. WO 2022/269712
International Publication Pamphlet No. WO 2019/057317
U.S. Patent Application Publication No. 2020/0057957
U.S. Patent Application Publication No. 2023/0244979
J. Tilly, et al., "The Variational Quantum Eigensolver: a review of methods and best practices", [online], Nov. 9, 2021, Cornell University, [searched on Jan. 8, 2025], Internet <URL: https://arxiv.org/abs/2111.05176>

The efficiency of expected value measurement may be improved by performing simultaneous measurement on simultaneously measurable terms included in the Hamiltonian. In this case, the simultaneously measured terms are not always independent of one another. Therefore, the number of samples estimated on the premise of the independence of each term described above is inaccurate.

In addition, some terms of the Hamiltonian hardly contribute to energy obtained as the sum of expected values for the respective terms. If such terms are included in a process for measurement or energy computation by a quantum computer, the entire processing time in the VQE increases.

### SUMMARY

According to one aspect, it is desirable to appropriately select terms for simultaneous measurement and appropriately determine the number of samples.

According to one aspect, there is provided a computer program that causes a computer to perform a procedure including: acquiring, for a plurality of terms included in a Hamiltonian corresponding to a problem to be solved by a variational quantum eigensolver and capable of being simultaneously measured by a quantum computer, first information indicative of a variance of each term and a covariance of each pair of two terms, upon performing a simultaneous measurement; generating an optimization problem based on the first information, the optimization problem minimizing a total sum of the variance of each term and the covariance of each pair in the plurality of terms, based on a constraint that an amount of a change with respect to an average value of a sum of the plurality of terms is equal to or less than a predetermined value; and determining a plurality of first terms to be simultaneously measured by the quantum computer among the plurality of terms by solving the optimization problem, and computing a number of samples of a simultaneous measurement based on the minimized total sum.

### BRIEF DESCRIPTION OF DRAWINGS

Reference will now be made, by way of example only, to the following drawings, in which:
FIG. 1 is a view for describing an information processing apparatus according to a first embodiment;
FIG. 2 illustrates an example of a quantum computation system according to a second embodiment;
FIG. 3 illustrates an example of the hardware of the quantum computation system;
FIG. 4 illustrates an example of the function of the quantum computation system;
FIG. 5 illustrates an example of the function of the quantum computation system (continued from FIG. 4);
FIG. 6 is a flowchart illustrative of an example of acquiring mean and covariance information;
FIG. 7 is a flowchart illustrative of an example of selecting terms and computing the number of samples; and
FIG. 8 is a flowchart illustrative of an example of performing the VQE.

### DESCRIPTION OF EMBODIMENTS

Embodiments will now be described with reference to the drawings.

### [First Embodiment]

A first embodiment will be described.

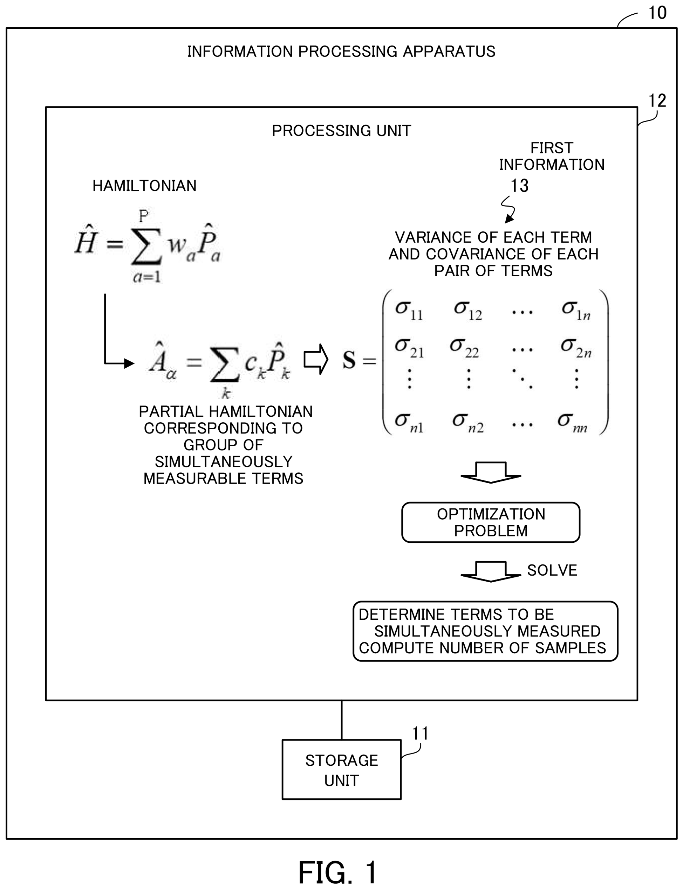

FIG. 1 is a view for describing an information processing apparatus according to a first embodiment. An information processing apparatus 10 supports quantum computation in a quantum computation system that performs the VQE. The quantum computation system includes a quantum computer and classical computers. The classical computers are also referred to as von Neumann computers. In FIG. 1, the quantum computation system is not illustrated. The information processing apparatus 10 may be a classical computer that performs the VQE in cooperation with a quantum computer. The information processing apparatus 10 may be a classical computer different from a classical computer that performs the VQE in cooperation with a quantum computer. The information processing apparatus 10 includes a storage unit 11 and a processing unit 12.

The storage unit 11 may be a volatile semiconductor memory, such as a random access memory (RAM), or non-volatile storage, such as a hard disk drive (HDD) or a flash memory. The processing unit 12 is, for example, a processor such as a central processing unit (CPU), a graphics processing unit (GPU), or a digital signal processor (DSP). However, the processing unit 12 may include a special-purpose electronic circuit such as an application specific integrated circuit (ASIC) or a field programmable gate array (FPGA). The processor executes a program stored in a memory (or the storage unit 11) such as a RAM. A set of processors may be referred to as a "multiprocessor" or simply a "processor".

The second quantization Hamiltonian in the field of quantum chemistry is expressed by equation (1). $\hat{H} = {\sum }_{pq} {h}_{pq} {\hat{a}}_{p}^{†} {\hat{a}}_{q} + {\sum }_{pqrs} {h}_{pqrs} {\hat{a}}_{p}^{†} {\hat{a}}_{q}^{†} {\hat{a}}_{s} {\hat{a}}_{r}$

a is an annihilation operator, where a hat "^" is added above "a" in equation (1), but the hat is omitted in the text. a^{†} is a generation operator, and h corresponding to each subscript is a coefficient. A Hamiltonian obtained by converting the generation-annihilation operators of equation (1) into a quantum gate is expressed by equation (2). $\hat{H} = {\sum }_{a = 1}^{P} {w}_{a} {\hat{P}}_{a}$

Pₐ is the tensor product of the Pauli matrices. wₐ is a weighting factor. P is the number of terms included in the Hamiltonian H. The Pauli matrices are expressed by equation (3) . ${σ}_{x} = \left(\begin{matrix}0 & 1 \\ 1 & 0\end{matrix}\right) , {σ}_{y} = \left(\begin{matrix}0 & - i \\ i & 0\end{matrix}\right) , {σ}_{z} = \left(\begin{matrix}1 & 0 \\ 0 & - 1\end{matrix}\right)$

In the VQE, quantum computation based on the Hamiltonian of equation (2) is performed. In the energy computation of the VQE, a process for solving the optimization problem expressed by equation (4) for a parameter θ of a unitary matrix U is performed. $\begin{matrix}E = {min}_{θ} \left〈0\right| {U}^{†} \left(θ\right) \hat{H} U \left(θ\right) \left|0\right〉 \\ = {min}_{θ} {\sum }_{a = 1}^{P} {w}_{a} \left〈0\right| {U}^{†} \left(θ\right) {\hat{P}}_{a} U \left(θ\right) \left|0\right〉\end{matrix}$

In solving the optimization problem, the quantum computation system statistically obtains each term of 〈0|U^{†}(θ)PₐU(θ)|0〉 by sampling Pₐ. It is known that a standard deviation ε of an error of statistical processing is expressed by equation (5) based on the central limit theorem. $ε = \sqrt{{\sum }_{a = 1}^{P} \frac{{w}_{a}^{2} Var \left({\hat{P}}_{a}\right)}{{m}_{a}}}$

Var(Pₐ) is the variance of Pₐ and mₐ is the number of samples of measurements for Pₐ. The total number m' of the number mₐ of samples of the entire Hamiltonian H is expressed by equation (6) . $m ′ = {\sum }_{a} {m}_{a}$

If it is assumed that the number mₐ of samples is equal for all Pₐ in equation (5), then equation (7) holds. $m ′ = P {\sum }_{a = 1}^{P} \frac{{w}_{a}^{2} Var \left({\hat{P}}_{a}\right)}{{ε}^{2}}$

m' provides an estimate of the number of samples needed to achieve the error ε. However, the estimation by equation (7) is based on the assumption that all the measurements of Pₐ are performed independently. Therefore, in a case where covariance between a measurement of a certain Pₐ and a measurement of another Pₐ is not 0, the estimation by equation (7) is inappropriate.

The quantum computation system groups the terms of the Hamiltonian into terms that may be simultaneously measured. Being capable of simultaneous measurement corresponds to being replaceable as an operator. The quantum computation system uses a quantum computer to simultaneously measure each term belonging to each group. In this case, there is a case where the covariance of a measurement of Pₐ belonging to a certain group and a measurement of another Pₐ belonging to the certain group does not become 0. Therefore, the number m' of samples obtained by equation (7) is inappropriate if simultaneous measurement is performed for each group. Therefore, the information processing apparatus 10 executes a quantum computation support method described below.

A linear combination of terms belonging to a group of simultaneously measurable terms is referred to as a partial Hamiltonian. A partial Hamiltonian A_{α} is expressed by equation (8). In equation (8), α is an identifier of a group. ${\hat{A}}_{α} = {\sum }_{k} {c}_{k} {\hat{P}}_{k} , {\hat{P}}_{k} ∈ {P}_{α}$

P_{α} is a set of tensor products of the Pauli matrices and cₖ is a weighting factor.

An expected value H⁻ of a Hamiltonian H with respect to a state vector |ψ〉 of a substance is obtained by equation (9). "H⁻" indicates a character with a bar "-" placed above "H". $\overline{H} = \left〈ψ\right| \hat{H} \left|ψ\right〉 = {\sum }_{α = 1}^{L} \overline{{A}_{α}}$

L is the number of groups. A expected value A_{α}⁻ of A_{α} is expressed by equation (10). $\overline{{A}_{α}} = \left〈ψ\right| {\hat{A}}_{α} \left|ψ\right〉 = \frac{1}{{m}_{α}} {\sum }_{i = 1}^{{m}_{α}} {A}_{α , i}$

A_{α,i} is the i-th measurement and A_{α}⁻ is the average of A_{α,i} measured m_{α} times.

From equation (8), the average Ave_{ψ}(A_{α}) of A_{α} is expressed by equation (11). ${Ave}_{ψ} \left({\hat{A}}_{α}\right) = {\sum }_{j} {c}_{j} {Ave}_{ψ} \left({\hat{P}}_{j}\right)$

Ave_{ψ}(Pⱼ) in equation (11) is expressed by equation (12). ${Ave}_{ψ} \left({\hat{P}}_{j}\right) = \left〈ψ\right| {\hat{P}}_{j} \left|ψ\right〉$

In addition, the variance Var_{ψ}(A_{α}) of A_{α} is expressed by equation (13) . ${Var}_{ψ} \left({\hat{A}}_{α}\right) = {\sum }_{jk} {c}_{j} {c}_{k} {Cov}_{ψ} \left({\hat{P}}_{j}, {\hat{P}}_{k}\right)$

Cov_{ψ}(Pⱼ,Pₖ) is the covariance of Pⱼ and Pₖ. Cov_{ψ}(Pⱼ,Pₖ) is expressed by equation (14). ${Cov}_{ψ} \left({\hat{P}}_{j}, {\hat{P}}_{k}\right) = \left〈ψ\right| {\hat{P}}_{j} {\hat{P}}_{k} \left|ψ\right〉 - \left〈ψ\right| {\hat{P}}_{j} \left|ψ\right〉 \left〈ψ\right| {\hat{P}}_{k} \left|ψ\right〉$

There is need to prepare a state vector (wave function) |ψ〉 for the measurement or computation of equation (12) or equation (14). As the state vector, for example, a ground state |ψ₀〉 obtained by a classical computation, such as a Hartree-Fock (HF) method, is used.

Data of each term on the right sides of the equations (12) and (14) are obtained by simulation by classical computation or actual measurement by a quantum computer. The covariance σᵢⱼ and the mean value µᵢ of A_{α} are defined by equations (15) and (16), respectively, by reassigning subscripts. ${σ}_{ij} = {c}_{i} {c}_{j} {Cov}_{ψ} \left({\hat{P}}_{i}, {\hat{P}}_{j}\right) , 1 \leq i \leq n , 1 \leq j \leq n$ ${μ}_{i} = {c}_{i} {Ave}_{ψ} \left({\hat{P}}_{i}\right) , 1 \leq i \leq n$ where n is the number of Pauli product terms Pᵢ included in A_{α}.

A variance-covariance matrix S of A_{α} is defined by equation (17) using σᵢⱼ. $S = \left(\begin{matrix}{σ}_{11} & {σ}_{12} & … & {σ}_{1 n} \\ {σ}_{21} & {σ}_{22} & … & {σ}_{2 n} \\ ⋮ & ⋮ & ⋱ & ⋮ \\ {σ}_{n 1} & {σ}_{n 2} & … & {σ}_{nn}\end{matrix}\right)$

An average value vector µ of A_{α} is defined by equation (18) using µᵢ. $μ = \left({μ}_{1},{μ}_{2},…,{μ}_{n}\right)$

Var_{ψ}(A_{α}) is expressed by equation (19) using the variance-covariance matrix S. ${Var}_{ψ} \left({\hat{A}}_{α}\right) = {1}_{n}^{T} S {1}_{n}$

Ave_{ψ}(A_{α}) is expressed by equation (20) using the average value vector µ. ${Ave}_{ψ} \left({\hat{A}}_{α}\right) = {1}_{n}^{T} μ = \overline{{A}_{α}}$

1ₙ is an n-dimensional column vector in which all elements are 1. 1ₙ is expressed by equation (21). ${1}_{n} = {\left(1, 1,…, 1\right)}^{T}$

A subscript T indicates transposition.

The processing unit 12 acquires first information 13 indicative of the variance-covariance matrix S and the mean value vector µ based on, for example, a result of simultaneous measurement of each term included in A_{α} by a quantum computer. The processing unit 12 may acquire the first information 13 indicative of the variance-covariance matrix S and the mean value vector µ based on the result of a simulation of simultaneous measurement in a classical computer.

The processing unit 12 selects a term to be actually used for computing an expected value among the terms of the partial Hamiltonian A_{α}. The selection of a term is expressed by changing 1ₙ in equations (19) and (20) to a binary variable vector bₙ. bₙ is expressed by equation (22). ${b}_{n} = {\left({b}_{1}, {b}_{2},…, {b}_{n}\right)}^{T} ∈ {\left\{0, 1\right\}}^{n}$

For example, bᵢ = 1 indicates that a term corresponding to bᵢ is to be measured. bᵢ = 0 indicates that a term corresponding to bᵢ is not to be measured.

A criterion for selecting a term is minimization of a variance σ_{A_α}² in equation (23). "A_α" indicates A_{α}. ${σ}_{{A}_{α}}^{2} = {b}_{n}^{T} S {b}_{n}$

As a constraint on the term selection, an inequality that suppresses the amount of a change of bₙ^{T}µ from the average value of A_{α} to a predetermined value δ or less is given. The criterion and constraint for the term selection are expressed as an optimization problem by equation (24). $\begin{matrix}{σ}_{{A}_{α}}^{2 ∗} = {min}_{{b}_{n}} {b}_{n}^{T} S {b}_{n} , {b}_{n} = {\left({b}_{1}, {b}_{2},…, {b}_{n}\right)}^{T} ∈ {\left\{0, 1\right\}}^{n} \\ subject to {1}_{n}^{T} μ - δ \leq {b}_{n}^{T} \leq {1}_{n}^{T} μ + δ\end{matrix}$

The processing unit 12 formulates a problem of selecting a term to be actually used for computing an expected value among the terms of the partial Hamiltonian A_{α} as the optimization problem of equation (24). The optimization problem of equation (24) is referred to as an integer quadratic programming problem.

The processing unit 12 solves the optimization problem of equation (24). The processing unit 12 uses an existing technique to solve the optimization problem. For example, the processing unit 12 may solve the optimization problem using an existing mathematical programming solver program. Furthermore, the processing unit 12 may formulate the optimization problem of equation (24) as an evaluation function in the QUBO format including an evaluation expression and a constraint expression of σ_{A_α}^{2*}. The processing unit 12 may solve the optimization problem formulated by the evaluation function in the QUBO format by using a technique such as a simulated annealing method or a quantum annealing method.

The processing unit 12 acquires a solution b* and a variance σ_{A_α}^{2*} corresponding to b* by solving the optimization problem of equation (24). It may be that the variance σ_{A_α}^{2*} is not always a global minimum value and that the variance σ_{A_α}^{2*} is a local minimum value, that is to say, a minimum value. Therefore, it may safely be said that the criterion for selecting a term is minimization of the variance value σ_{A_α}². In actual quantum computation, only a term in which an element of b* is 1 is to be simultaneously measured. That is to say, a term in which an element of b* is 0 is excluded from measurement target by pruning. It may safely be said that the optimization problem of equation (24) is the problem of minimizing, for selecting a term to be simultaneously measured among a plurality of terms, the total sum of the variance of each term and the covariance of each pair in the plurality of terms based on the constraint that the amount of a change with respect to the average value of the sum of the plurality of terms is equal to or less than a predetermined value.

A term to be selected may be a term after preliminary selection using an existing technique or the like is performed. For example, pruning may be performed in advance on a term whose contribution to H is known to be smaller than a threshold among all terms included in H or a term corresponding to an unimportant trajectory.

The processing unit 12 computes the number m of measurement samples based on the central limit theorem. The number m of samples is expressed by equation (25). $m = \frac{{σ}_{{A}_{α}}^{2 ∗}}{{ε}^{2}}$

ε is a tolerance. A value of ε is given in advance according to a problem to be solved by the VQE. The processing unit 12 determines b* and the number m of samples for each partial Hamiltonian included in the Hamiltonian H.

The processing unit 12 simultaneously realizes selection of the terms of the Hamiltonian and estimation of the number of samples in this way by solving the optimization problem of equation (24). The number m of samples in equation (25) is an appropriate value in consideration of the covariance of terms in the partial Hamiltonian.

The processing unit 12 inputs b* and the number m of samples for each partial Hamiltonian to the quantum computation system and executes the VQE based on b* and m. For example, the processing unit 12 may cause the quantum computer to execute simultaneous measurement of a plurality of terms indicated by b*, acquire measurements of m samples for each term to be simultaneously measured from the quantum computer, and use the measurements for energy computation of the VQE.

According to the information processing apparatus 10, the first information 13 is acquired. The first information 13 indicates the variance of each term and the covariance of each pair of two terms when simultaneous measurement is performed for a plurality of terms that may be simultaneously measured by the quantum computer. The plurality of terms are some terms included in the Hamiltonian corresponding to a problem to be solved by the variational quantum eigensolver (VQE). An optimization problem is generated based on the first information 13. The optimization problem is the problem of minimizing the total sum (σ_{A_α}²*) of the variance of each term and the covariance of each pair in a plurality of terms based on the constraint that the amount of a change with respect to the average value of the sum of the plurality of terms is equal to or less than a predetermined value. By solving the optimization problem, a plurality of first terms to be simultaneously measured by the quantum computer are determined among the plurality of terms. The number of samples of simultaneous measurement is computed based on the minimized total sum (σ_{A_α}^{2*}).

As a result, the information processing apparatus 10 appropriately selects a term to be simultaneously measured and appropriately determines the number of samples. The information processing apparatus 10 causes the quantum computation system to execute the VQE on the basis of the result of the selection of terms and the determined number of samples. The information processing apparatus 10 reduces the number of terms to be measured by the quantum computer by narrowing down terms to be actually measured among the plurality of terms that may be simultaneously measured, and improves the efficiency of the computation of the VQE. The information processing apparatus 10 appropriately maintains a balance between an error and a computation speed between which there is a trade-off relationship by rationalizing the number of samples.

### [Second Embodiment]

A second embodiment will now be described.

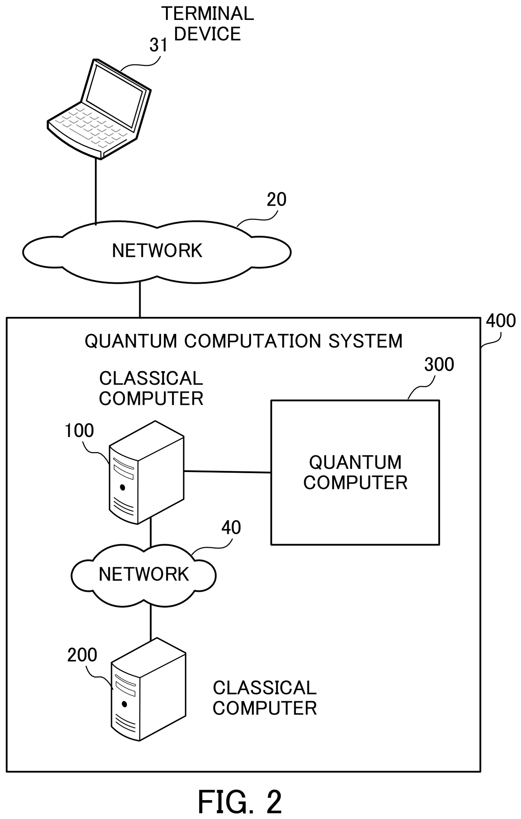

FIG. 2 illustrates an example of a quantum computation system according to a second embodiment. A quantum computation system 400 performs quantum chemical computation by the VQE. The quantum computation system 400 is connected to a terminal device 31 via a network 20. The terminal device 31 transmits a request for quantum computation to the quantum computation system 400 in response to operation by a user.

The quantum computation system 400 includes classical computers 100 and 200 and a quantum computer 300. The classical computer 100 and the quantum computer 300 are connected by a communication interface. The classical computers 100 and 200 are connected via a network 40 in the quantum computation system 400.

The classical computers 100 and 200 are von Neumann computers. The classical computer 100 performs processing such as generation of a quantum circuit and optimization of parameters used for computation of the quantum circuit. The quantum computer 300 is a computer that performs quantum chemical computation by performing operation based on a quantum gate on a quantum bit. The quantum computer 300 performs quantum chemical computation of VQE algorithm according to the quantum circuit and the parameters generated by the classical computer 100.

The classical computer 200 supports quantum computation of the VQE by the classical computer 100 and the quantum computer 300. The classical computer 200 is an example of the information processing apparatus 10 according to the first embodiment.

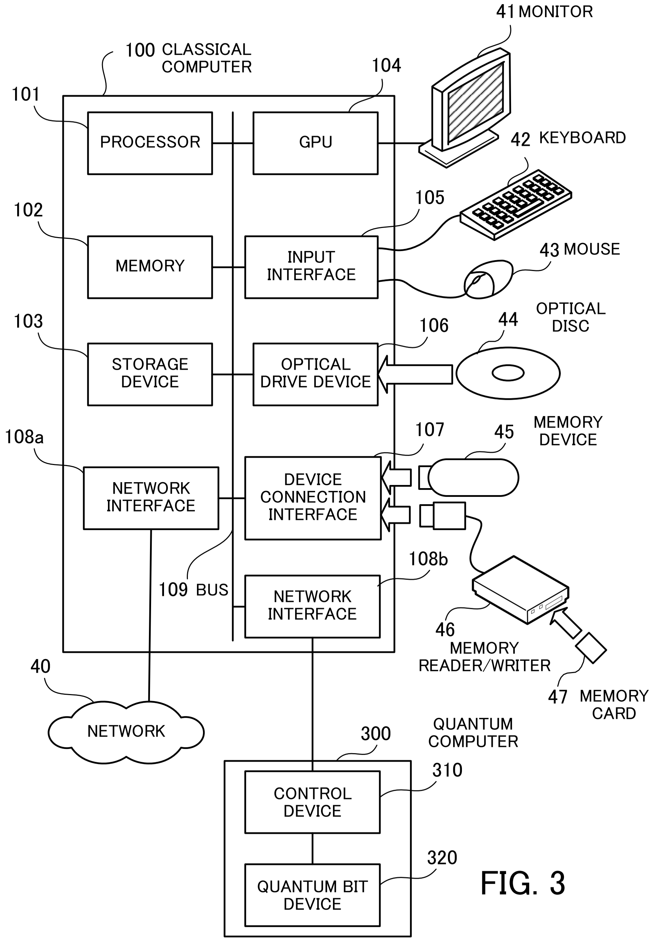

FIG. 3 illustrates an example of the hardware of the quantum computation system. The entire classical computer 100 is controlled by a processor 101. A memory 102 and a plurality of peripheral devices are connected to the processor 101 via a bus 109. The processor 101 may be a multiprocessor. The processor 101 is, for example, a CPU, a micro processing unit (MPU), or a DSP. At least a part of functions realized by the processor 101 by executing programs may be realized by an electronic circuit such as an ASIC or a programmable logic device (PLD).

The memory 102 is used as a main storage device of the classical computer 100. The memory 102 temporarily stores at least a part of an operating system (OS) program and application programs to be executed by the processor 101. The memory 102 also stores various data used for processing by the processor 101. As the memory 102, for example, a volatile semiconductor storage device such as a RAM is used.

The peripheral devices connected to the bus 109 are a storage device 103, a GPU 104, an input interface 105, an optical drive device 106, a device connection interface 107, and network interfaces 108a and 108b.

The storage device 103 electrically or magnetically writes data to and reads data from a built-in recording medium. The storage device 103 is used as an auxiliary storage device of the classical computer 100. The storage device 103 stores the OS program, application programs, and various data. The storage device 103 is, for example, an HDD or a solid state drive (SSD).

The GPU 104 is an arithmetic unit that performs image processing. The GPU 104 is an example of a graphic controller. A monitor 41 is connected to the GPU 104. The GPU 104 displays an image on a screen of the monitor 41 in accordance with an instruction from the processor 101. For example, the monitor 41 is a display device using organic electro luminescence (EL) or a liquid crystal display device.

A keyboard 42 and a mouse 43 are connected to the input interface 105. The input interface 105 transmits a signal sent from the keyboard 42 or the mouse 43 to the processor 101. The mouse 43 is an example of a pointing device and another pointing device may be used. For example, a touch panel, a tablet, a touch pad, or a track ball may be used.

The optical drive device 106 reads data recorded on the optical disc 44 or writes data to the optical disc 44 using a laser beam or the like. The optical disc 44 is a portable recording medium on which data is recorded so as to be readable by the reflection of light. The optical disc 44 is, for example, a digital versatile disc (DVD), a DVD-RAM, a compact disc read only memory (CD-ROM), a CD-Recordable (CD-R), CD-rewritable (CD-RW), or the like.

The device connection interface 107 is a communication interface for connecting the peripheral devices to the classical computer 100. For example, a memory device 45 and a memory reader/writer 46 are connected to the device connection interface 107. The memory device 45 is a recording medium having the function of communicating with the device connection interface 107. The memory reader/writer 46 is a device that writes data to or reads data from the memory card 47. The memory card 47 is a card-type recording medium.

The network interface 108a is connected to a network 40. The network interface 108a transmits data to and receives data from other computers or communication devices via the network 40. The network interface 108a is a wired communication interface connected to a wired communication device, such as a switch or a router, via a cable. Furthermore, the network interface 108a may be a wireless communication interface communicatively connected to a wireless communication device, such as a base station or an access point, by radio waves.

The network interface 108b is an interface for connecting to the quantum computer 300. The processor 101 transmits the quantum circuit to the quantum computer 300 via the network interface 108b and causes the quantum computer 300 to perform quantum computation. Furthermore, the processor 101 acquires a result of the quantum computation via the network interface 108b.

Although not illustrated, the classical computer 100 may include a network interface connected to the network 20. However, the network 40 may be connected to the network 20. In this case, the classical computer 100 may communicate with the terminal device 31 via the network 40.

The classical computer 200 has hardware similar to that of the classical computer 100. The quantum computation system 400 realizes the processing functions of the second embodiment by the above hardware. The information processing apparatus 10 according to the first embodiment is also realized by hardware similar to that of the classical computer 100 illustrated in FIG. 3. A processor that executes a certain process among a plurality of processes by the classical computer 200 may be different from a processor that executes a process different from the certain process among the plurality of processes. The processor may be referred to as "processor circuitry". The processor of the classical computer 200 is an example of the processing unit 12 of the first embodiment. A memory and a storage device of the classical computer 200 are examples of the storage unit 11 of the first embodiment.

The classical computers 100 and 200 realize the processing functions of the second embodiment, for example, by executing a program recorded on a computer-readable recording medium. The program describing processing contents to be executed by the classical computers 100 and 200 is recorded in various record media.

For example, a program to be executed by the classical computer 100 is stored in the storage device 103. The processor 101 loads at least a part of the program in the storage device 103 into the memory 102 and executes the program. The program to be executed by the classical computer 200 is stored in the storage device of the classical computer 200. The processor of the classical computer 200 loads at least a part of the program in the storage device into the memory of the classical computer 200 and executes the program.

The program executed by the classical computers 100 and 200 is recorded in a portable recording medium such as the optical disc 44, the memory device 45, or the memory card 47. After the program stored in the portable recording medium is installed in the storage device 103, for example, under the control of the processor 101, the program is executed by the classical computer 100. The program stored in the portable recording medium is installed in the storage device of the classical computer 200, for example, under the control of the processor of the classical computer 200 and then becomes executable in the classical computer 200. Alternatively, the processor 101 or the processor of the classical computer 200 may read the program directly from the portable recording medium and execute the program.

The quantum computer 300 includes a control device 310 and a quantum bit device 320. The control device 310 performs gate operation on a quantum bit in the quantum bit device 320 according to the quantum circuit. The quantum bit device 320 has a plurality of quantum bits. The quantum bit device 320 is, for example, a quantum processing unit (QPU).

In the quantum computation system 400, the classical computer 100 and the quantum computer 300 operate in cooperation with each other to perform quantum chemical computation by the VQE.

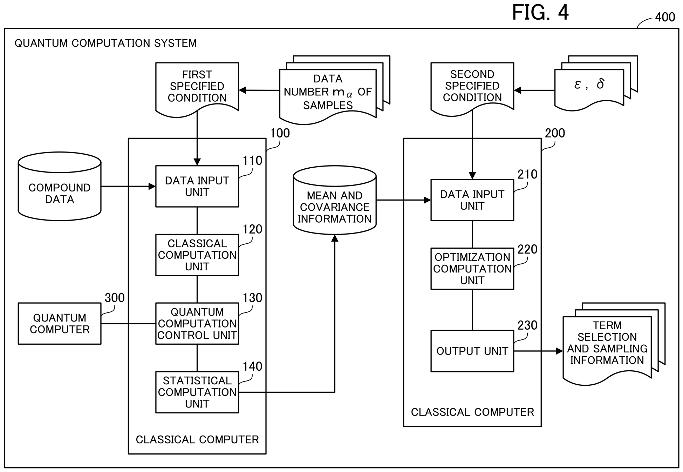

FIG. 4 illustrates an example of the function of the quantum computation system. The classical computer 100 includes a data input unit 110, a classical computation unit 120, a quantum computation control unit 130, and a statistical computation unit 140. The data input unit 110, the classical computation unit 120, the quantum computation control unit 130, and the statistical computation unit 140 are realized by the processor 101 by executing a program stored in the memory 102.

The data input unit 110 accepts first input data. The first input data may be inputted from the terminal device 31 to the classical computer 100. The first input data includes compound data and a first specified condition. The compound data is information indicative of a Hamiltonian in the VQE. Terms included in the Hamiltonian are classified into groups that may be simultaneously measured. α is an identifier of a group. The first specified condition includes an initial value m_{α} of the number of samples. The m_{α} is given in advance for each group of terms that may be simultaneously measured. The m_{α} is used for determining the actual number m of samples for the group α. A value of m_{α} in each group may be the same.

The classical computation unit 120 solves a ground state |ψ₀〉 by classical computation. For example, the classical computation unit 120 may obtain the ground state |ψ₀〉 using an HF method or the like. The ground state |ψ₀〉 is used as an initial state of a trial in the VQE.

The quantum computation control unit 130 instructs the quantum computer 300 to perform sampling based on the first specified condition for each term belonging to the group α. For a plurality of terms that may be measured simultaneously, measurements may be sampled by one quantum circuit. For example, the quantum computation control unit 130 inputs information on the quantum circuit and information on |ψ₀〉 to the quantum computer 300 and causes the quantum computer 300 to execute the quantum circuit.

In response to the instructions from the quantum computation control unit 130, the quantum computer 300 samples each term belonging to the group α by simultaneous measurement according to the first specified condition, and responds to the quantum computation control unit 130 with a measurement of each term.

In order to determine the actual number m of samples, the quantum computation control unit 130 designates all terms belonging to the group α and causes the quantum computer 300 to perform sampling with the number m_{α} of samples. The quantum computation control unit 130 acquires the sampling result of a measurement of each term of each group for all groups included in the Hamiltonian. The sampling result of the group α includes m_{α} measurements for each term belonging to the group α.

The quantum computation control unit 130 may perform sampling by simultaneous measurement of each term of the group α by a simulation that simulates the operation of the quantum computer 300. That is to say, the quantum computation control unit 130 may acquire a measurement in a case where each term of the group α is simultaneously measured by the simulation instead of actual measurement by the quantum computer 300.

The statistical computation unit 140 computes Ave_{ψ}(Pⱼ) of equation (12) and Cov_{ψ}(Pⱼ,Pₖ) of equation (14) based on the sampling result of each term belonging to the group α. The statistical computation unit 140 computes σᵢⱼ of equation (15) based on Cov_{ψ}(Pⱼ, Pₖ), and generates the variance-covariance matrix S of equation (17). The statistical computation unit 140 computes µᵢ of equation (16) based on Ave_{ψ}(Pⱼ) and generates the average value vector µ of equation (18). The statistical computation unit 140 outputs mean and covariance information including S and µ. The mean and covariance information is inputted to the classical computer 200.

The classical computer 200 includes a data input unit 210, an optimization computation unit 220, and an output unit 230. The data input unit 210, the optimization computation unit 220, and the output unit 230 are realized by the processor of the classical computer 200 by executing a program stored in the memory of the classical computer 200.

The data input unit 210 accepts second input data. The second input data include the mean and covariance information and a second specified condition. The second specified condition may be inputted by the terminal device 31. The data input unit 210 stores the second input data in a storage unit of the classical computer 200. The storage unit is realized by the memory or the storage device of the classical computer 200. In FIG. 4, the storage unit is not illustrated. The second specified condition includes the allowable error ε of the equation (25) and the predetermined value δ of the Equation (24). ε and δ may be designated for each group.

The optimization computation unit 220 generates the optimization problem of equation (24) based on the mean and covariance information. The optimization problem of equation (24) is an integer quadratic programming problem. The optimization computation unit 220 obtains a solution b* and σ_{A_α}^{2*} corresponding to b* by solving the optimization problem. The optimization computation unit 220 generates an optimization problem for each group, and solves the optimization problem. The optimization computation unit 220 obtains b* and σ_{A_α}^{2*} for each group.

The optimization computation unit 220 may solve an integer quadratic programming problem using, for example, an existing mathematical programming solver program. The optimization computation unit 220 may formulate the optimization problem of equation (24) with an evaluation function in the QUBO format and solve the optimization problem using the simulated annealing method, the quantum annealing method, or the like.

The optimization computation unit 220 computes the number m of samples in Equation (25) based on σ_{A_α}^{2*}. The number m of samples is computed for each group.

The output unit 230 outputs term selection and sampling information including the term selection result b* and the number m of samples for each group. The term selection and sampling information is inputted to the classical computer 100 at the time of actual VQE execution.

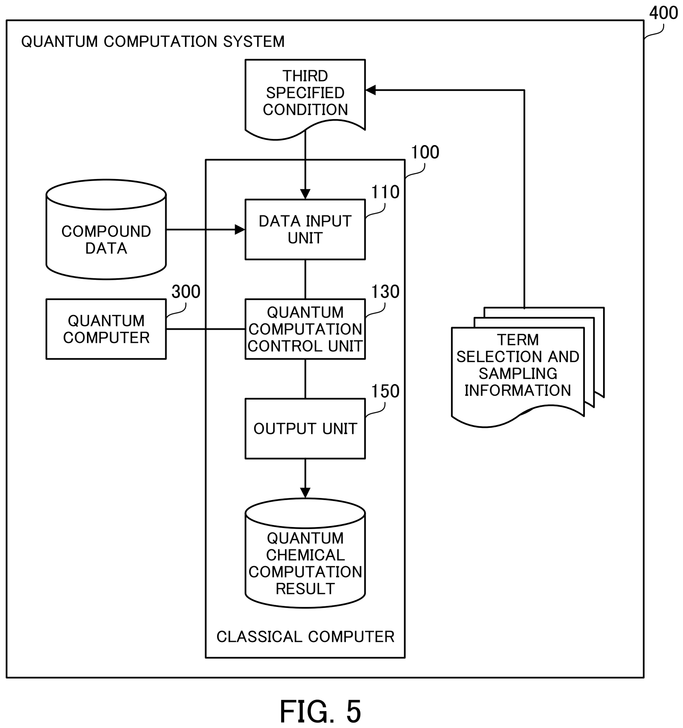

FIG. 5 illustrates an example of the function of the quantum computation system (continued from FIG. 4). The classical computer 100 includes a data input unit 110, a quantum computation control unit 130, and an output unit 150. The output unit 150 is realized by the processor 101 by executing a program stored in the memory 102. In FIG. 5, a classical computation unit 120 and a statistical computation unit 140 are not illustrated.

The data input unit 110 accepts third input data. The third input data include compound data and a third specified condition. The compound data are the same as those in FIG. 4. The third specified condition includes item selection and sampling information for each group.

The quantum computation control unit 130 cooperates with the quantum computer 300 to perform an actual VQE based on the third input data. Specifically, the quantum computation control unit 130 instructs the quantum computer 300 to perform sampling based on the term selection and sampling information for the group α. For example, the quantum computation control unit 130 inputs information on a quantum circuit reflecting a term selection result and information on |ψ₀〉 to the quantum computer 300 to execute the quantum circuit. |ψ₀〉 computed by the classical computation unit 120 is used. In response to the instruction from the quantum computation control unit 130, the quantum computer 300 samples only selected terms among terms belonging to the group α by the number m of samples by simultaneous measurement, and responds to the quantum computation control unit 130 with a sampling result.

The quantum computation control unit 130 computes a partial Hamiltonian Aα corresponding to each group based on the sampling result by the quantum computer 300 and performs energy computation corresponding to the Hamiltonian H. The quantum computation control unit 130 optimizes the parameter θ of equation (4) in cooperation with the quantum computer 300 based on the energy computation.

The output unit 150 outputs a quantum chemical computation result. The quantum chemical computation result includes, for example, a ground state based on the optimized parameter θ and energy of the ground state.

The processing procedure of the quantum computation system 400 will now be described.

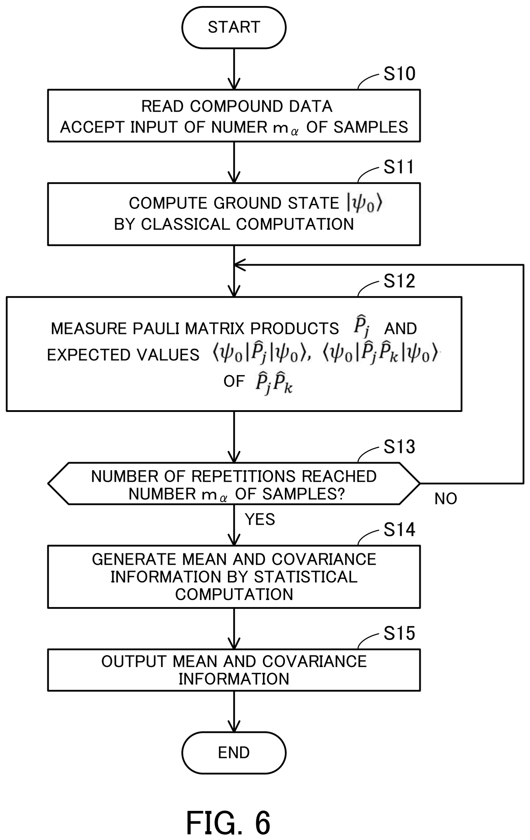

FIG. 6 is a flowchart illustrative of an example of acquiring mean and covariance information.

(S10) The data input unit 110 reads the compound data. The data input unit 110 accepts an input of the number m_{α} of samples. The compound data includes information on the Hamiltonian H of equation (2). Furthermore, the Hamiltonian H is represented by the sum of partial Hamiltonians A_{α}. The number m_{α} of samples is inputted for each group α of simultaneously measurable terms. In addition, the following steps S11 to S15 are performed for each group α.

(S11) The classical computation unit 120 performs computation of the ground state |ψ₀〉 by classical computation.

(S12) The quantum computation control unit 130 uses the quantum computer 300 to measure the Pauli matrix products Pⱼ included in the Hamiltonian H and expected values 〈ψ₀|Pⱼ|ψ₀〉 and 〈ψ₀|PⱼPₖ|ψ₀〉 of PⱼPₖ. The quantum computation control unit 130 adds 1 to the number of repetitions of step S12. An initial value of the number of repetitions of step S12 is 0.

The quantum computation control unit 130 may compute the expected values 〈ψ₀|Pⱼ|ψ₀〉 and 〈ψ₀|PⱼPₖ|ψ₀〉 by a simulation that simulates the operation of the quantum computer 300.

(S13) The quantum computation control unit 130 determines whether or not the number of repetitions of step S12 has reached the number m_{α} of samples. If the number of repetitions reaches the number m_{α} of samples, then the process proceeds to step S14. If the number of repetitions has not reached the number m_{α} of samples, then the process proceeds to step S12.

(S14) The statistical computation unit 140 generates the mean and covariance information by statistical computation based on the measurement result of step S12. The mean and covariance information includes a variance-covariance matrix S of A_{α} and the mean value vector µ of A_{α}. The mean and covariance information is generated for each group α.

(S15) The statistical computation unit 140 outputs the mean and covariance information. Then, acquiring the mean and covariance information ends. The mean and covariance information is inputted to the classical computer 200.

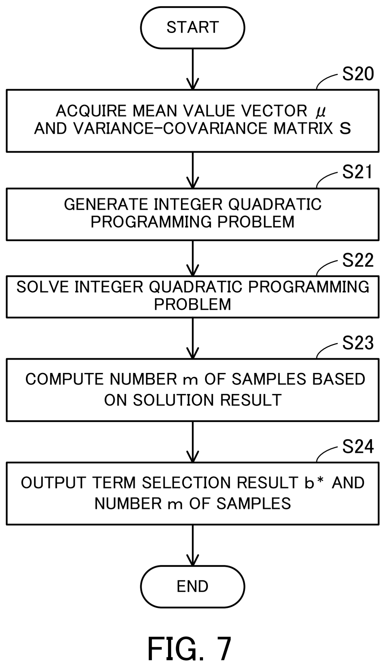

FIG. 7 is a flowchart illustrative of an example of selecting terms and computing the number of samples. Steps S20 to S24 are performed for each group α.

(S20) The data input unit 210 acquires the mean value vector µ and the variance-covariance matrix S based on the variance-covariance information.

(S21) The optimization computation unit 220 generates an integer quadratic programming problem based on the mean value vector µ and the variance-covariance matrix S. The integer quadratic programming problem is expressed by equation (24).

(S22) The optimization computation unit 220 solves the integer quadratic programming problem. The optimization computation unit 220 obtains the term selection result b* and the variance σ_{A_α}^{2*} as a solution result.

(S23) The optimization computation unit 220 computes the number m of samples based on the solution result. The number m of samples is expressed by equation (25).

(S24) The output unit 230 outputs the term selection result b* and the number m of samples. Then, selecting terms and computing the number of samples end.

The term selection result b* and the number m of samples are outputted as the term selection and sampling information. The term selection and sampling information is output for each group α. For example, the output unit 230 inputs the term selection and sampling information corresponding to each α to the classical computer 100 to execute an actual VQE based on the term selection and sampling information. An example of performing an actual VQE will now be described.

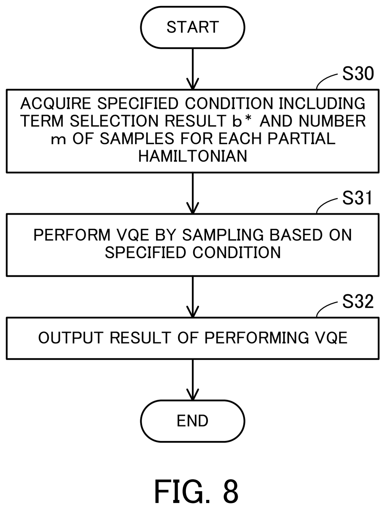

FIG. 8 is a flowchart illustrative of an example of performing the VQE.

(S30) The data input unit 110 acquires a specified condition including the term selection result b* and the number m of samples for each partial Hamiltonian. Furthermore, the data input unit 110 acquires the compound data of step S10.

(S31) The quantum computation control unit 130 cooperates with the quantum computer 300 to perform an actual VQE by sampling based on the specified condition. The sampling is performed on a term specified by the term selection result b* among terms of the partial Hamiltonian A_{α} by the number m of samples. A_{α} is computed based on the result of the sampling. Energy is computed by doing the sum of A_{α}. The quantum computation control unit 130 obtains a ground state and ground energy as the result of performing the VQE.

(S32) The output unit 150 outputs the result of performing the VQE. Then, performing the VQE ends.

The classical computer 200 simultaneously realizes the selection of terms of the Hamiltonian and the estimation of the number of samples in this way by solving the optimization problem of equation (24). The number m of samples in equation (25) is an appropriate value in consideration of the covariance of terms in the partial Hamiltonian.

The classical computer 200 appropriately selects terms to be simultaneously measured and determines the number of samples in this way. The classical computer 200 causes the quantum computation system 400 to perform the VQE based on the result of the selection of the terms and the determined number of samples. The classical computer 200 reduces the number of terms to be measured by the quantum computer 300 by narrowing down the terms to be actually measured among a plurality of terms that may be simultaneously measured, and improves the efficiency of the computation of the VQE. The classical computer 200 appropriately maintains a balance between an error and a computation speed, between which there is a trade-off relationship, by optimizing the number of samples.

As described above, the classical computer 200 performs the following processing. The data input unit 210 acquires first information for a plurality of terms included in a Hamiltonian corresponding to a problem to be solved by the variational quantum eigensolver and capable of being simultaneously measured by the quantum computer 300. The first information indicates the variance of each term and the covariance of each pair of two terms when simultaneous measurement is performed. The optimization computation unit 220 generates an optimization problem based on the first information. The optimization problem is the problem of minimizing the total sum of the variance of each term and the covariance of each pair in the plurality of terms on the basis of the constraint that the amount of a change with respect to an average value of the sum of the plurality of terms is equal to or less than a predetermined value for selection of terms to be simultaneously measured among the plurality of terms. The optimization computation unit 220 determines a plurality of first terms to be simultaneously measured by the quantum computer 300 among the plurality of terms by solving the optimization problem. The optimization computation unit 220 computes the number of samples of the simultaneous measurement based on the minimized total sum.

As a result, the classical computer 200 appropriately selects terms to be simultaneously measured and appropriately determines the number of samples. The variance-covariance matrix S is an example of the first information. The optimization problem is expressed by, for example, equation (24). The variance value σ_{A_α}²* corresponds to the total sum of the variance of each term and the covariance of each pair in the plurality of terms.

The optimization computation unit 220 computes the number of samples by dividing the minimized total sum by the square of the tolerance. By doing so, the classical computer 200 appropriately determines the number of samples. The number of samples is computed by equation (25).

The output unit 230 may input the plurality of first terms determined to be simultaneously measured and the number of samples to the quantum computer 300. The output unit 230 may cause the quantum computer 300 to simultaneously measure the plurality of first terms based on the number of samples. As a result, the classical computer 200 improves the efficiency of quantum computation of the VQE. Furthermore, the classical computer 200 improves the accuracy of a computation result by the VQE by optimizing the number of samples and the term selection.

The Hamiltonian H may include a plurality of groups of a plurality of terms that may be simultaneously measured. The optimization computation unit 220 determines a plurality of first terms to be simultaneously measured and computes the number of samples by generating and solving an optimization problem for each group. As a result, the classical computer 200 appropriately selects terms to be simultaneously measured and appropriately determines the number of samples, for each group included in the Hamiltonian H.

The information processing of the first embodiment is realized by causing the processing unit 12 to execute a program. Furthermore, the information processing of the second embodiment is realized by causing the processor 101 to execute a program. The program may be recorded in the computer-readable recording medium.

For example, the program is distributed by distributing the recording medium on which the program is recorded. Furthermore, the program may be stored in another computer and distributed via a network. For example, a computer may store (install) the program recorded in the recording medium or the program received from another computer in a storage device, such as the memory 102 or the storage device 103, read the program from the storage device, and execute the program.

According to one aspect, it is possible to appropriately select terms to be simultaneously measured and appropriately determine the number of samples.

In any of the above aspects, the various features may be implemented in hardware, or as software modules running on one or more processors/computers.

The present disclosure also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program may be stored on a non-transitory computer-readable medium, or it could, for example, be in the form of a signal such as a downloadable data signal provided from an Internet website, or it could be in any other form.

## Claims

1. A computer program that causes a computer to perform a procedure comprising:
acquiring, for a plurality of terms included in a Hamiltonian corresponding to a problem to be solved by a variational quantum eigensolver and capable of being simultaneously measured by a quantum computer, first information (13) indicative of a variance of each term and a covariance of each pair of two terms, upon performing a simultaneous measurement;
generating an optimization problem based on the first information, the optimization problem minimizing a total sum of the variance of each term and the covariance of each pair in the plurality of terms, based on a constraint that an amount of a change with respect to an average value of a sum of the plurality of terms is equal to or less than a predetermined value; and
determining a plurality of first terms to be simultaneously measured by the quantum computer among the plurality of terms by solving the optimization problem, and computing a number of samples of a simultaneous measurement based on the minimized total sum.

2. The computer program according to claim 1, wherein in the computing the number of samples, the number of samples is computed by dividing the minimized total sum by a square of a tolerance.

3. The computer program according to claim 1 or claim 2, wherein the process further includes inputting the plurality of first terms determined to be simultaneously measured and the number of samples to the quantum computer, and causing the quantum computer to perform the simultaneous measurement on the plurality of first terms based on the number of samples.

4. The computer program according to any of the preceding claims, wherein:
the Hamiltonian includes a plurality of groups of the plurality of terms capable of being simultaneously measured, and
the plurality of first terms to be simultaneously measured are determined and the number of samples is computed, for each of the plurality of groups.

5. A computer-readable storage medium having the computer program of any of the preceding claims stored thereon.

6. A quantum computation support method executed by a computer, the quantum computation support method comprising:
acquiring, for a plurality of terms included in a Hamiltonian corresponding to a problem to be solved by a variational quantum eigensolver and capable of being simultaneously measured by a quantum computer, first information (13) indicating a variance of each term and a covariance of each pair of two terms, upon performing a simultaneous measurement;
generating an optimization problem based on the first information, the optimization problem minimizing a total sum of a variance of each term and a covariance of each pair in the plurality of terms, based on a constraint that an amount of a change with respect to an average value of a sum of the plurality of terms is equal to or less than a predetermined value; and
determining a plurality of first terms to be simultaneously measured by the quantum computer among the plurality of terms by solving the optimization problem and computing, by the processor, a number of samples of the simultaneous measurement based on the minimized total sum.

7. An information processing apparatus comprising:
storage means (11) for storing, for a plurality of terms included in a Hamiltonian corresponding to a problem to be solved by a variational quantum eigensolver and capable of being simultaneously measured by a quantum computer, first information (13) indicative of a variance of each term and a covariance of each pair of two terms, upon performing a simultaneous measurement; and
processing means (12) for:
generating, based on the first information, an optimization problem which minimizes a total sum of the variance of said each term and the covariance of said each pair in the plurality of terms based on a constraint that an amount of a change with respect to an average value of a sum of the plurality of terms is equal to or less than a predetermined value;
determining a plurality of first terms to be simultaneously measured by the quantum computer among the plurality of terms by solving the optimization problem; and
computing a number of samples of the simultaneous measurement based on the minimized total sum.
